**Europäisches Patentamt**

**European Patent Office**

**Office européen des brevets**

(11) Numéro de publication: **0 115 236**
**A1**

# (12) DEMANDE DE BREVET EUROPEEN

(21) Numéro de dépôt: **83402514.0**

(22) Date de dépôt: **22.12.83**

(51) Int. Cl.³: **B 07 C 3/14**
**G 06 K 7/10**

(30) Priorité: **30.12.82 FR 8222103**
**19.05.83 FR 8308297**

(43) Date de publication de la demande:
**08.08.84 Bulletin 84/32**

(84) Etats contractants désignés:
**DE IT NL**

(71) Demandeur: **L'Etat Français, représenté par le Ministre des P.T.T. (Centre National d'Etudes des Télécommunications)**
**38-40 rue du Général Leclerc**
**F-92131 Issy-les-Moulineaux(FR)**

(72) Inventeur: **Giron, Philippe**
**24, rue d'Annam**
**F-75020 Paris(FR)**

(72) Inventeur: **Calvez, Jean-Claude**
**47, Avenue Reille**
**F-75014 Paris(FR)**

(74) Mandataire: **Mongrédien, André et al,**
**c/o BREVATOME 25, rue de Ponthieu**
**F-75008 Paris(FR)**

(54) Tête de lecture de codes à bâtonnets, appareil d'analyse utilisant une telle tête et carte permettant l'étalonnage de cet appareil.

(57) Tête de lecture de codes à bâtonnets, appareil mettant en oeuvre une telle tête et carte étalon permettant un étalonnage de cet appareil.

La tête comprend un photorécepteur (16), un amplificateur (24), un circuit (25) de détection de début et de fin de lettre, un circuit (27) de suppression de fond de lettre, un circuit (28) de détection des bâtonnets, un aiguilleur (29), un convertisseur analogique numérique (30) et des interfaces (31, 32).

Application au tri postal.

FIG.4

EP 0 115 236 A1

Tête de lecture de codes à batonnets, appareil d'analyse utilisant une telle tête et carte permettant l'étalonnage de cet appareil.

La présente invention a pour objet une tête de lecture de codes à bâtonnets, un appareil d'analyse utilisant une telle tête et une carte permettant l'étalonnage de cet appareil. De tels appareils, que les demandeurs désignent respectivement par T.A.L.I.S.M.A.N. (pour Tête Asynchrone de Lecture d'une Indexation par Système de Mesures Analogiques et Numériques) et par A.L.A.D.I.N. (pour Appareil Lecteur Analyseur d'Indexation), sont utilisés pour le contrôle des codes postaux à bâtonnets (codes d'acheminement ou de distribution) figurant sur les lettres destinées à être triées mécaniquement.

Un tel code utilise 20 bâtonnets disposés dans le coin inférieur droit de l'enveloppe. Ce code traduit le code postal à 5 chiffres. On dispose donc de 4 bâtonnets par chiffre de code postal. Le premier bâtonnet de chaque groupe de 4 (celui qui est le plus à droite) occupe une place fixe et constitue une barre origine. Les 3 autres sont disposés sur 5 positions possibles (code dit "3 parmi 5"). On dispose donc de 30 positions pour représenter un code.

Il existe actuellement des centres de tri automatique équipés de machines capables de trier le courrier ainsi codé. Chaque lettre est transportée entre deux courroies, et passe devant une tête de lecture apte à lire le code et à le traduire. En fonction de celui-ci, la lettre est aiguillée vers des cases de destinations différentes. Le débit est d'environ 35 000 lettres par heure et par machine.

L'un des problèmes posés par cette technique tient à ce que les codes rencontrés peuvent avoir plusieurs origines, selon qu'ils sont obtenus par des systèmes à jet d'encre ou par des systèmes à impact utilisant un ruban encreur. Ils peuvent donc présenter des caractéristiques différentes : les systèmes à jet d'encre ont une propension à consteller la zone d'indexation de taches, dont la présence peut fausser le décodage et les systèmes à ruban conduisent à un niveau de fluorescence qui décroît avec le temps et à une dispersion des caractéristiques.

Ces défauts qui affectent le code entraînent des risques de rejet de lettres. Or, un taux de rejet de 0,5%, appliqué à un million de lettres, correspond à 5 000 lettres rejetées, ce qui est prohibitif. Il est donc nécessaire de minimiser le taux de rejet. Pour cela il faut pouvoir mesurer les paramètres des codes et disposer d'un moyen très précis de mesure du niveau de fluorescence des bâtonnets. Il faut notamment pouvoir :

1) offrir des possibilités de réglage des têtes de lecture situées sur les trieuses,

2) déterminer, en présence d'une élévation anormale du taux de rejet, si la cause est imputable à la tête ou à la qualité d'un lot de codes,

3) prévoir, de manière précise, la fin de vie de rubans servant à imprimer les bâtonnets fluorescents,

4) déterminer, dans le cas d'une imprimante à jet, la concentration optimale en pigments,

5) disposer de moyens de contrôle des performances des têtes de lecture sortant de fabrication, des dispositifs d'impression de toute origine, ainsi que des rubans et des encres.

Dans les têtes de lecture habituelles, on se contente de détecter la présence ou l'absence d'un bâtonnet sur l'enveloppe. Une logique associée détermine s'il s'agit d'un bâtonnet ou d'une marque parasite. Le code postal en est ensuite déduit. Le signal dû au fond de lettre est éliminé par un filtre passe haut, ce qui supprime toute possibilité de mesure de l'amplitude du signal lumineux provenant des bâtonnets, en raison de la différentiation du signal.

Toutes les têtes de lecture développées jusqu'ici avaient en fait pour objectif unique le décodage du code postal, de sorte que tous les tests, toutes les mesures sur les bâtonnets, nécessitaient un oscilloscope auxiliaire pour une lecture sur l'écran de l'amplitude de fluorescence des bâtonnets. Or, la spécification technique sur les codes, fait apparaître des notions de moyenne arithmétique des niveaux des bâtonnets, de coefficient de variation maximal des niveaux, d'espacement. Aucun calcul concernant ces grandeurs ne peut être effectué simplement avec de tels moyens.

Le but de l'invention est justement de permettre de telles mesures et de tels calculs, afin de donner la possibilité de vérifier si les spécifications techniques relatives à ces codes sont bien satisfaites. L'invention peut être utilisée soit par les équipes de recette et de maintenance des installations postales, notamment pour vérifier les caractéristiques de nouveaux appareils, soit par les constructeurs de têtes de lecture.

La présente invention a donc pour objet une tête de lecture perfectionnée qui permet un tel contrôle. De façon plus précise, la tête de l'invention est pourvue de moyens permettant :

- la détection du front avant et du front arrière de l'enveloppe,
- la détection de toutes les marques situées dans la bande réservée au code, sur toute la longueur de l'enveloppe, que ces marques correspondent à un bâtonnet ou non, avec envoi d'un signal à l'extérieur,
- la mesure de ces marques (sur 8 éléments binaires) pour un traitement ultérieur utilisant un microprocesseur,

B 7727/B 7884.C   RS

- la mesure du signal de fond de lettre.

La présente invention a également pour objet un appareil d'analyse de code, qui utilise la tête précédente et permet de mesurer les paramètres d'un code à bâtonnets, lettre par lettre, de les afficher et de les imprimer.

L'appareil de l'invention est conçu pour pouvoir :

- décoder le code postal d'acheminement ou de distribution,

- afficher l'image du code pour en vérifier la cohérence,

- mesurer les niveaux de chaque bâtonnet et éventuellement des taches ou marques parasites,

- donner la moyenne des niveaux des bâtonnets et/ou des taches,

- donner le coefficient de variation des niveaux des bâtonnets et/ou des taches,

- mesurer les espacements entre bâtonnets.

Enfin, l'invention a pour objet une carte étalon permettant l'étalonnage de l'appareil précédent.

Les caractéristiques de l'invention apparaîtront mieux après la description qui va suivre, d'exemples de réalisation donnés à titre explicatif et nullement limitatif. Cette description se réfère à des dessins annexés sur lesquels :

- la figure 1 rappelle l'allure d'un code à bâtonnets et la place de ce code sur une enveloppe,

- la figure 2 illustre l'allure générale d'une tête de lecture conforme à l'invention,

- la figure 3 représente un schéma des moyens essentiels de la tête de lecture,

- la figure 4 illustre le schéma du circuit électronique utilisé dans la tête de lecture,

- la figure 5 représente des signaux intervenant dans le circuit précédent,

- la figure 6 est une vue générale d'un appareil conforme à l'invention utilisant la tête de lecture précédemment décrite,

- la figure 7 illustre le schéma synoptique des différents organes de l'appareil selon l'invention,

- la figure 8 montre la répartition des principaux organes de l'appareil,

- la figure 9 illustre la place relative de la tête de lecture par rapport au chemin de défilement,

- la figure 10 représente le clavier de l'appareil,

- la figure 11 illustre une carte étalon,

- la figure 12 représente le schéma du circuit électronique utilisé dans le cas particulier de bâtonnets à contraste,

- la figure 13 montre les places respectives des plages d'excitation et de réception, ainsi que la zone de travail correspondant à une mesure par contraste,

- la figure 14 représente divers signaux intervenant dans le circuit de la figure 12.

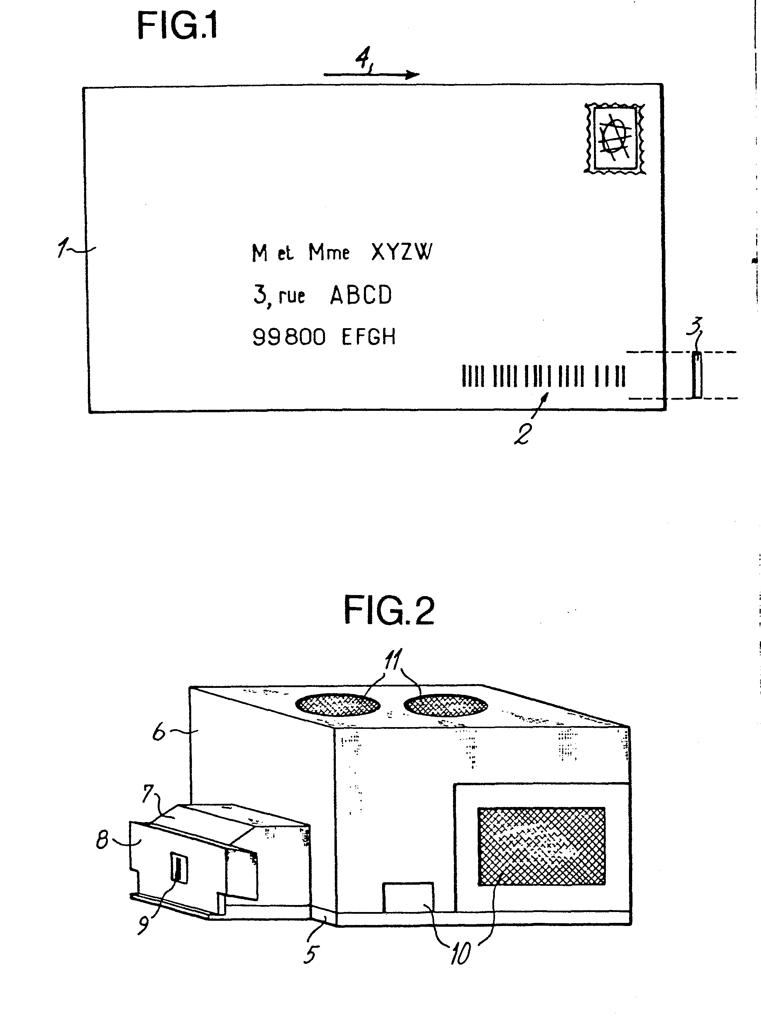

La description qui suit porte d'abord sur des moyens adaptés à l'utilisation de bâtonnets fluorescents (figures 1 à 11). Elle envisagera ensuite le cas où les bâtonnets ne sont pas fluorescents mais à contraste.

La figure 1 représente une enveloppe timbrée 1, sur laquelle est marqué, dans le coin inférieur droit, un code 2 à bâtonnets fluorescents. Ces bâtonnets sont groupés, comme expliqué plus haut, en cinq groupes de quatre, le premier bâtonnet de chaque grou-

B 7727/B 7884.C   RS

pe étant celui qui est disposé le plus à droite. A ce code normalisé correspond une fenêtre de lecture, symbolisée par le rectangle 3, de 18 mm de haut et 0,6 mm de large. Le sens de défilement de l'enveloppe est marqué par la flèche 4.

La tête de lecture de l'invention est représentée sur la figure 2. Elle comprend une semelle 5 supportant un capot 6, sur le côté duquel on trouve un bloc optique 7. A l'extrémité de ce bloc se trouve un patin de frottement 8 percé d'une fente de lecture 9. Des ouvertures 10 sont percées dans le capot pour permettre l'entrée d'air de refroidissement. Des ventilateurs 11 sont disposés à la partie supérieure du capot.

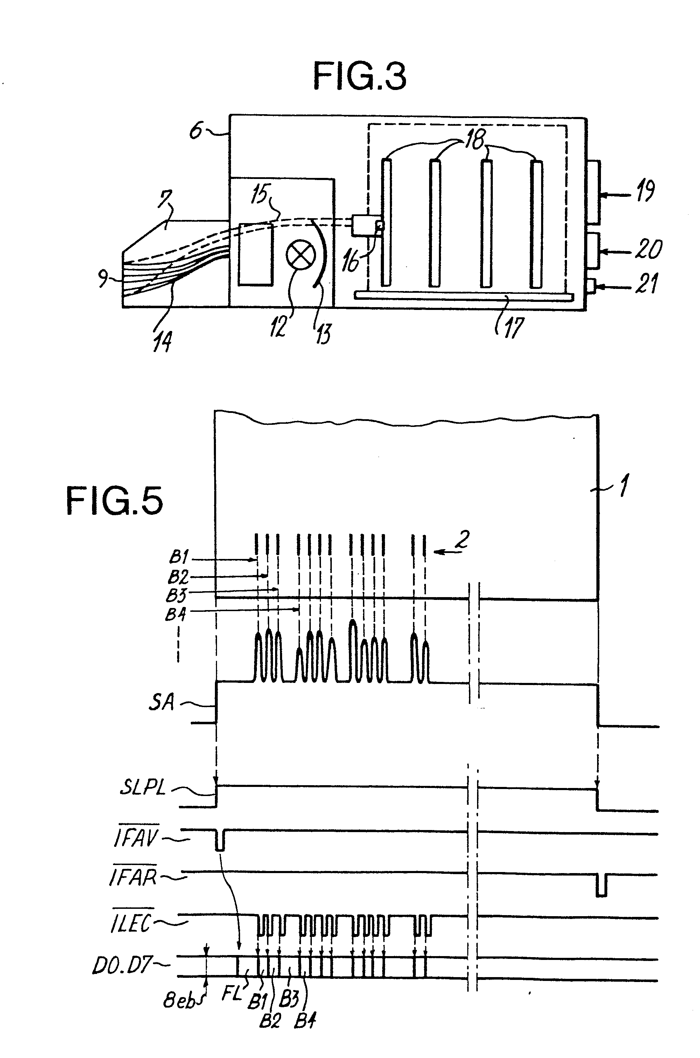

La figure 3 illustre les moyens constituant cette tête. Une lampe à halogène 12 filtrée pour émettre dans le bleu (bande 430-460 nm) associée à un réflecteur 13, émet un rayonnement apte à exciter la fluorescence des bâtonnets. Ce rayonnement est guidé par une optique d'émission, constituée dans la variante illustrée par un faisceau de fibres optiques 14 vers la fente 9. Une optique de réception, constituée ici d'un faisceau de fibres optiques 15, guide la lumière de fluorescence. Un filtre optique centré sur la bande de fluorescence des bâtonnets est avantageusement placé après les fibres 15, pour éviter le prélèvement du rayonnement d'excitation. Une photodiode 16 reçoit le rayonnement de fluorescence guidé par les fibres 15. Ce photorécepteur est relié à un circuit de traitement constitué de différentes cartes : une carte 17 d'alimentation générale et des cartes 18 supportant divers circuits.

La sortie des données numériques de mesure s'effectue par la connexion 19, l'entrée d'alimentation par la fiche 20. La tête illustrée dispose également-

ment d'une sortie 21 délivrant un signal analogique.

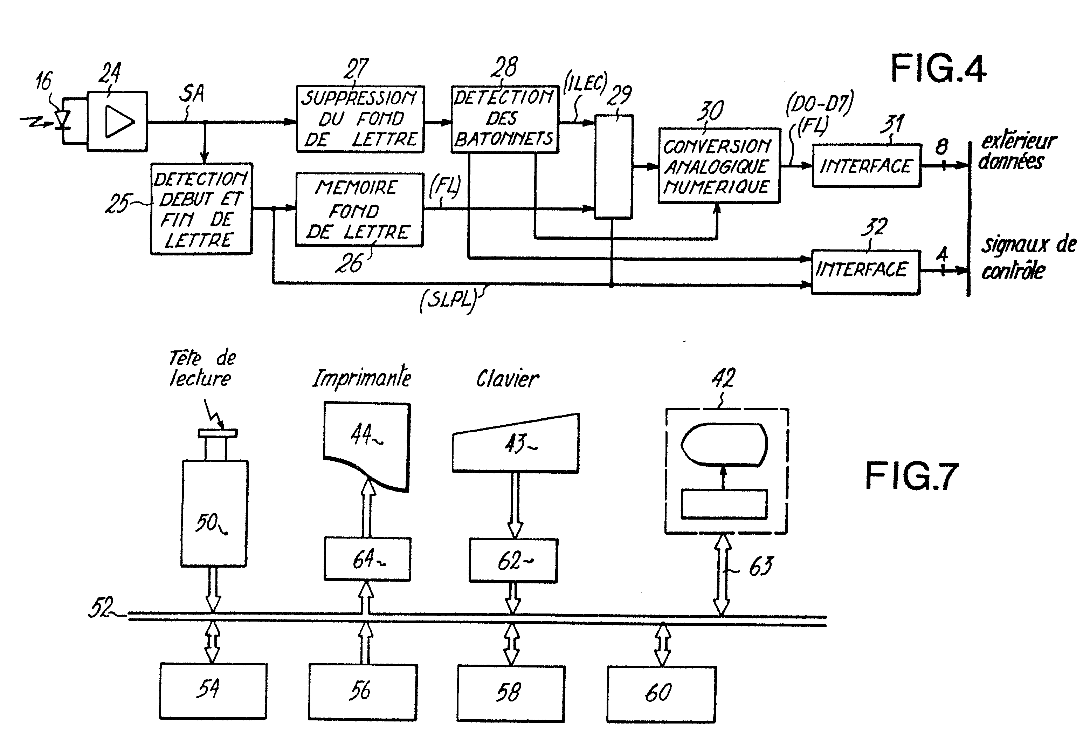

La figure 4 représente plus en détail les moyens utilisés dans le circuit de traitement relié au photorécepteur, moyens qui constituent l'une des caractéristiques de l'invention.

Ce circuit comprend :

- un amplificateur linéaire 24 relié au photorécepteur 16,

- un circuit 25 de détection de lettre relié à la sortie de l'amplificateur 24, ce circuit délivrant des signaux de début et de fin de lettre, ainsi qu'un signal logique quand une lettre défile devant la tête de lecture,

- un circuit 27 de suppression de fond de lettre,

- un circuit 28 à seuil pour la détection des bâtonnets, ce circuit étant relié au précédent 27 et étant apte à former la dérivée du signal qu'il reçoit et à analyser le passage à zéro de cette dérivée,

- un convertisseur analogique numérique rapide 30 relié à la sortie du circuit 28,

- une interface de sortie 31, 32 reliée au convertisseur et adaptée aux moyens de traitement du signal délivré par la tête.

En option, le circuit peut comprendre en outre, si l'on souhaite disposer du signal de fond de lettre, un circuit 26 de mesure du niveau de fond de lettre et un aiguillage 29 à deux entrées reliées respectivement au circuit 28 de détection des bâtonnets et au circuit 26 de mémoire du fond de lettre, et à une sortie.

L'interface de sortie peut être de différents types. Il peut s'agir :

- d'une interface de couplage pour microprocesseur, avec sortie en trois états,

- d'une interface de couplage avec sortie en collecteurs ouverts,
- d'une interface pour liaison à grande distance ou pour milieu fortement perturbé, avec sorties différentielles pour tous les signaux.

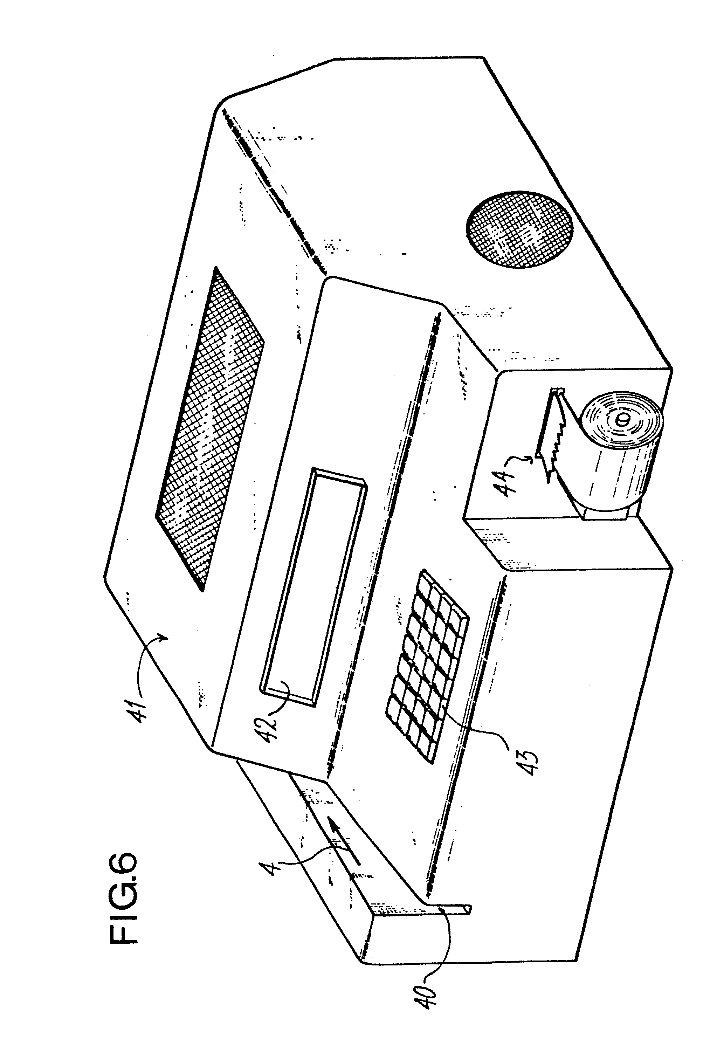

La figure 5 représente quelques uns des signaux utilisés dans le circuit de la figure 4. La lettre 1 à contrôler, avec son code 2, est représentée à la partie supérieure. Le signal SA de la première ligne représente le signal analogique délivré par le photorécepteur ; le signal SLPL représente le signal logique de présence de lettre, ici un niveau logique 1. Le début et la fin de ce signal permettent d'engendrer des impulsions d'interruption déterminant le front avant $\overline{IFAV}$ (troisième ligne) et le front arrière $\overline{IFAR}$ (quatrième ligne) (la barre symbolisant le complément logique). Les impulsions de lecture $\overline{ILEC}$ des bâtonnets suivent sur la cinquième ligne. La dernière ligne représente la place des données numériques correspondant aux bâtonnets (B1, B2...) ces données étant précédées par celle qui caractérise le fond de lettre, soit FL. Toutes ces données numériques sont codées sur 8 éléments binaires D0, D1.... D7.

Le circuit 28 de détection des bâtonnets travaille par détection du passage à zéro de la dérivée du signal qu'il reçoit. Il possède un seuil ajustable qui permet de s'affranchir du bruit de fond. Ce seuil n'est ajustable qu'aux essais et il est rendu fixe pour l'exploitation.

Le convertisseur analogique-numérique 30 est un convertisseur rapide, de temps de réponse 2,8 µs environ.

Les interfaces peuvent posséder deux afficheurs à 7 segments, indiquant le nombre de marques détectées sur la tête, une diode électroluminescente indiquant le défilement d'une lettre devant la tête, et huit diodes électroluminescentes donnant la valeur de la dernière mesure enregistrée.

Lorsque l'interface est d'un type permettant le couplage à un calculateur à microprocesseur, elle possède une entrée de validation, ce qui permet à la tête d'être adressée comme un périphérique quelconque.

La tête de lecture qui vient d'être décrite peut être utilisée soit sur un banc de défilement de lettres, soit en parallèle sur une autre tête de lecture soit encore sur une machine destinée à établir des statistiques, etc... Mais elle trouve une application particulière à la réalisation d'un appareil d'analyse perfectionné des codes d'indexation, qui va maintenant être décrit.

Cet appareil est représenté, sous son aspect extérieur, sur la figure 6. Il comprend un chemin de défilement 40, le sens du défilement étant toujours repéré par la flèche 4, un logement 41 pour la tête de lecture précédemment décrite et pour des moyens de traitement numérique, un écran d'affichage 42, un clavier 43 et une imprimante 44.

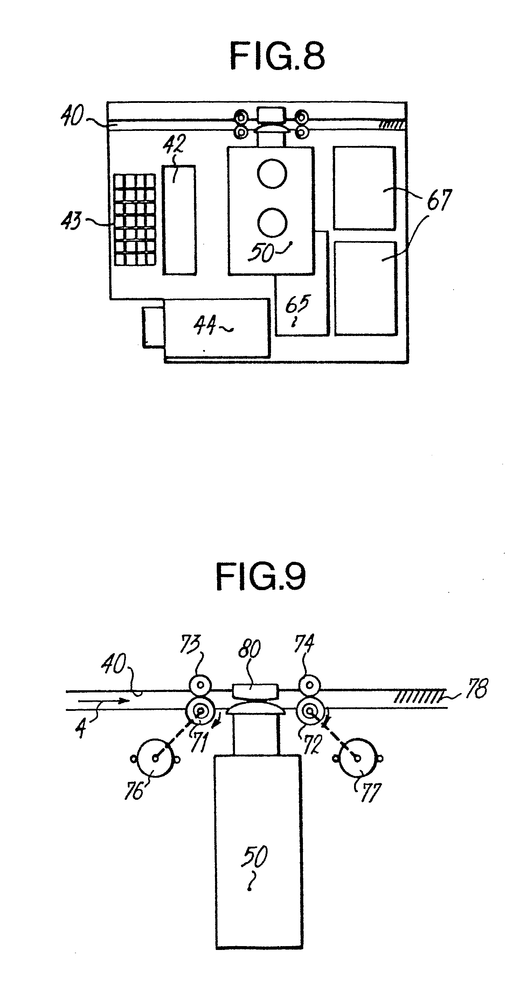

La figure 7 montre l'organisation fonctionnelle de l'appareil. La tête de lecture 50 délivre des signaux numériques à un bus 52, lequel est relié à un microprocesseur 54 (par exemple du type 6802) ; le bus est également relié à une mémoire effaçable programmable (EPROM) 56, (par exemple du type TMS 2532 de 4K octets), à une mémoire vive 58, (composée de deux circuits MN 2114N-3L, soit 1 K octet), à un module temporisateur programmable 60, (par exemple du type EF 6840), à un premier module interface adaptateur de périphérique 62, (par exemple du type EF 6821), relié au clavier 43, à un second module interface adaptateur

B 7727/B 7884.C RS

de périphérique 64 (du même type que le premier) relié à l'imprimante 44 (qui peut être par exemple une imprimante thermique 24 colonnes ALPHAGRAPH 2401 d'ENERTEC) et enfin à l'écran d'affichage 42.

Le fonctionnement de cet ensemble de traitement est classique et il est lié au mode de fonctionnement du microprocesseur. Dans le cas du EF 6802 de EFCIS on dispose d'une horloge interne à deux phases et d'une mémoire vive interne de 128 octets adressable de 0000 à 007F (notation hexadécimale). L'horloge interne fonctionne grâce à un quartz externe à 4 MHz (pour un fonctionnement à 1MHz) et à deux condensateurs de 27 pF. Ce microprocesseur possède des entrées d'interruption reliées aux sorties de la tête de lecture déjà décrite.

L'ensemble du circuit de traitement dispose de 8 zones mémoires de 8K octets chacune. L'une de ces 8 zones peut être adressée par un démultiplexeur 1 parmi 8 (par exemple du type 74 LS 138). Ce démultiplexeur est commandé par un signal à 3 éléments binaires. Les 8 zones mémoires sont les suivantes, avec leurs adresses en notation hexadécimale :

- la première zone (0000 à 1FFF) correspond à la mémoire vive interne du microprocesseur qui sert de mémoire de travail et de pile pour le logiciel,
- la deuxième zone (2000 à 3FFF) valide la mémoire externe 58 de 1 K octet (300 ns de temps d'accès) qui sert au rangement des niveaux de fluorescence et des espacements entre barres et pour divers tableaux,
- la troisième zone (4000 à 5FFF) valide la tête de lecture 50 : un état bas fait passer en basse impédance le circuit trois états placé en sortie de la tête et permet la lecture des sorties du convertisseur analogique-numérique et donc l'acquisition des

**0115236**

niveaux des barres et des taches. Les signaux $\overline{\text{IFAV}}$ et $\overline{\text{ILEC}}$ de la figure 5 sont appliqués à l'entrée du microprocesseur ; comme expliqué plus haut ils correspondent au front avant d'une lettre et à la détection des marques fluorescentes.

- la quatrième zone mémoire (6000 à 7FFF) valide le temporisateur programmable 60 qui occupe en fait 8 octets de mémoire,

- la cinquième zone mémoire (8000 à 9FFF) valide les deux circuits interface adaptateurs pour périphériques 62 et 64,

- la sixième zone mémoire (A000 à BFFF) valide le dispositif d'affichage,

- la septième zone mémoire (C000 à DFFF) n'est pas utilisée ; elle est disponible pour une éventuelle extension,

- la huitième zone mémoire (E000 à FFFF) correspond à la mémoire EPROM 56, qui contient le logiciel de gestion de l'affichage et du clavier, celui d'acquisition des données (niveaux et espacements) et celui de calcul des différents paramètres de cette indexation.

Les moyens de traitement numérique décrits sont aptes à :

- analyser diverses caractéristiques des bâtonnets figurant sur l'objet traité et notamment leur intensité, leur durée, leur position, leur espacement,

- calculer diverses grandeurs, notamment des moyennes d'intensités, des espacements, des coefficients de variation,

- effectuer un décodage à partir de la position des bâtonnets détectés et restituer le code correspondant.

- détecter la présence de taches situées entre les bâtonnets et mesurer leurs caractéristiques.

La figure 8 illustre la répartion pratique des organes de l'appareil avec le clavier 43, l'imprimante 44, la tête de lecture 50. La carte 65 contient le microprocesseur et les autres moyens de traitement numérique. Les alimentations portent la référence 67.

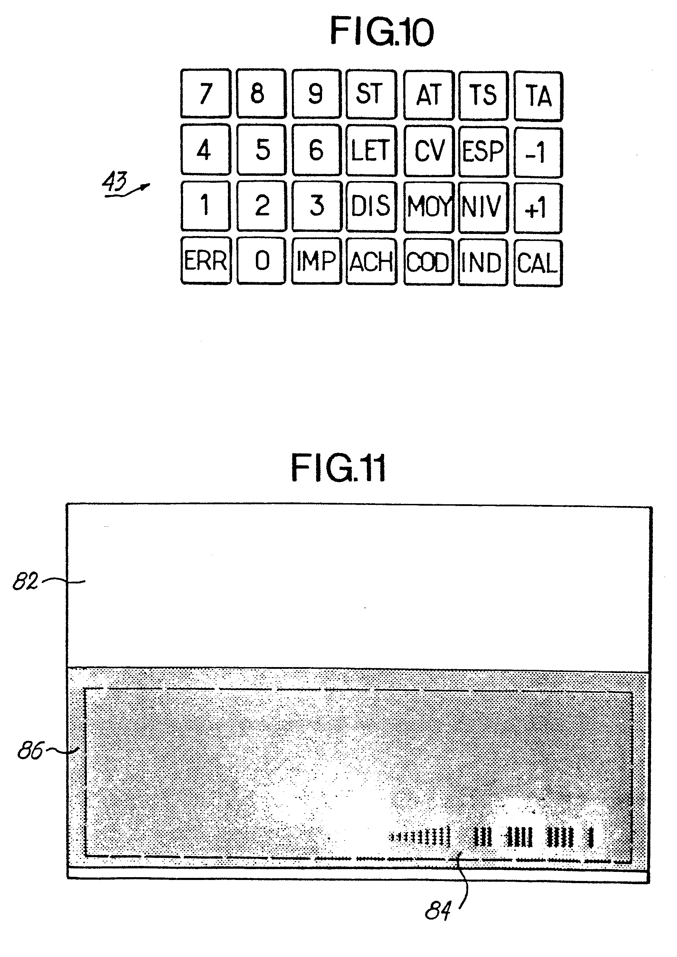

La figure 9 représente un détail du système de défilement de lettres devant la tête de lecture. Ce système comprend un chemin de défilement 40, (figure 6), deux jeux de galets, respectivement d'entraînement 71, 72 et de pressage 73, 74, deux moteurs synchrones alternatifs 76, 77 entraînant chacun un cylindre supportant le galet d'entraînement, ces deux moteurs tournant en permanence, un balai de freinage 78 à l'extrémité du chemin 40 et enfin un patin de placage 80.

La vitesse de rotation des moteurs est telle que la vitesse linéaire de la lettre est voisine de 1,67 m/s. Le premier jeu de galets 71, 73 sert à entraîner la lettre devant la tête 50 ; le deuxième 72, 74, est disposé de façon à assurer le défilement de toute lettre susceptible de faire l'ojet d'un tri mécanique (longueur supérieure ou égale à 14 cm) avant qu'elle ne soit plus entraînée par le premier.

La figure 10 représente un mode particulier de réalisation d'un clavier utilisable dans l'invention. La signification des 28 symboles utilisés est la suivante :

IMP       : impression de l'affichage (ou du tableau des valeurs pour les niveaux et les espacements).

TA        : test de l'affichage.

CAL       : calibration de l'appareil à partir d'une carte étalon.

0 à 9     : digits permettant soit d'imprimer un numéro de référence, soit d'indiquer le rang d'un bâtonnet.

B 7727/B 7884.C  RS

ERR     : erreur, correction du dernier digit entré,

LET     : mode lettre : acheminement et distribution,

ACH     : mode acheminement.

DIS     : mode distribution.

MOY     : moyenne des niveaux de l'indexation.

DIS     : coefficient de variation des niveaux de l'indexation.

CODE    : traduction du code postal.

ESP     : espacements des bâtonnets (et/ou de taches).

NIV     : niveaux des bâtonnets (et/ou des taches).

+1      : incrémentation d'une unité du compteur de bâtonnets (et/ou des taches).

-1      : décrémentation d'une unité du compteur de bâtonnets (et/ou des taches).

ST      : indexation sans taches.

AT      : indexation avec taches.

TS      : taches seules.

L'appareil qui vient d'être décrit peut être étalonné à partir des résultats obtenus à partir d'une carte étalon portant des bâtonnets de forme et de répartition connues. Les demandeurs désignent cette carte par C.I.R.C.E. (pour Carte Indexée de Réglage, Contrôle et Etalonnage).

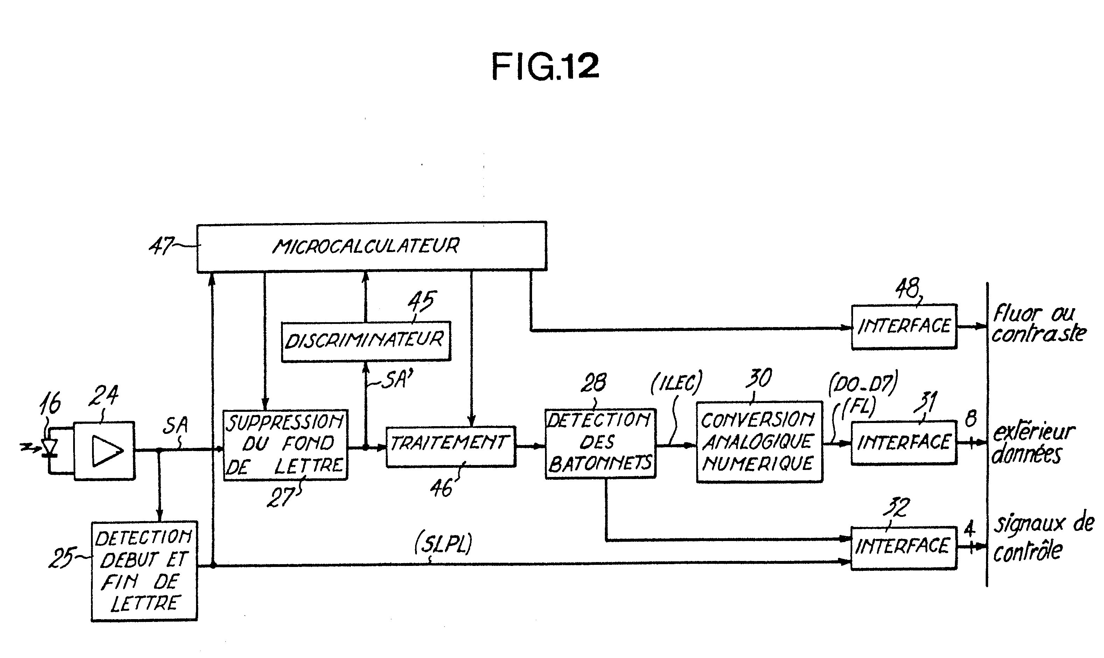

Une telle carte étalon est représentée sur la figure 11. Elle comprend un support rigide 82 (par exemple en carton fort de 320 g/m$^2$), sur lequel est déposé un aplat 84 de matière fluorescente (de l'encre par exemple) de caractéristiques optiques identiques à celles de la matière utilisée pour les objets à traiter. Cet aplat est recouvert d'un cache photographique noir 86 sur lequel des bâtonnets transparents de différentes tailles ont été marqués et qui laissent par transparence, apparaître la matière fluorescente.

L'un des bâtonnets, par exemple celui qui est situé à l'extrême droite, sert de référence. Son niveau est fixé à 100 unités (par rapport à un étalon primaire, par exemple à base d'un corps fluorescent SnSr dopé à $Eu^{+++}$). Le niveau de référence (ici 100) associé au rang du bâtonnet de référence (ici 01) est indiqué sur la carte (au recto par exemple) sous la forme 100/01.

Dans ce cas, pour étalonner l'appareil, on tape le nombre 100 01 et on appuie sur la touche CAL, ce qui signifie que le résultat de la mesure doit donner 100 pour le premier bâtonnet fluorescent lu. On introduit ensuite la carte étalon dans l'appareil, comme une lettre ordinaire. Les moyens de traitement ajustent alors le gain total de la chaîne de mesure pour que le résultat relatif au premier bâtonnet lu soit bien égal à 100.

Une telle carte permet également d'étalonner l'appareil en vitesse de défilement. En effet, les traits marqués sur la carte ont une largeur définie avec une précision de l'ordre de 1/100 de mm. Ayant détecté une série de bâtonnets sur la carte étalon, par exemple 12, l'appareil calcule le temps moyen de passage d'un bâtonnet, donc la vitesse de défilement de la carte.

On peut étalonner également l'espacement entre bâtonnets, en calculant un coefficient permettant de diviser l'intervalle minimal entre deux bâtonnets (par exemple de 1,66 m) en 100 pas. La mesure de l'espacement sur une lettre revient alors à compter le nombre de ces pas, ce qui correspond à une distance exprimée en une unité égale à 0,016 mm.

On va décrire maintenant une variante de réalisation de la tête de lecture de codes qui correspond au cas où les bâtonnets ne sont plus fluorescents. On sait en effet que les codes à bâtonnets fluorescents ne sont pas les seuls possibles pour constituer des indexations de lettres. Il existe aussi des codes à bâtonnets noirs sur fond blanc ou, plus généralement, foncés sur fond clair. Mais la lecture d'une indexation à encre noire ne fait pas appel aux mêmes phénomènes physiques que la lecture de bâtonnets fluorescents. Dans ce dernier cas, on excite une encre spécifique avec une lumière centrée dans une bande de 400 à 500 nm environ et l'on recueille le rayonnement de fluorescence émis par l'encre à environ 600 nm. Cela suppose que soient séparées le plus possible les longueurs d'onde d'émission et de réception, afin que la lumière d'émission qui a pu être réfléchie ou diffusée par la lettre ne vienne pas perturber le fonctionnement du capteur en se mêlant à la lumière de fluorescence. Dans le cas d'indexation à encre noire, la bande d'émission est confondue avec celle de réception. La mesure porte alors sur un contraste dans une bande donnée. Le contraste peut être défini par la relation :

$$100 \times \frac{Rb - Rn}{Rb}$$

où Rb est la réflectance du fond de lettre et Rn la réflectance d'un bâtonnet.

Bien que l'indexation fluorescente apporte des avantages, elle présente néanmoins un certain nombre d'inconvénients :

- nécessité de disposer d'une encre spécifique fluorescente et cela en grande quantité (une machine peut trier 30 000 lettres à l'heure, un centre de tri automatique peut comporter plusieurs machines et il y a une cinquantaine de tels centres en France),

- perte d'énergie dans la tête de lecture, où la lampe à halogène est filtrée dans le bleu si bien que 2,4% de son énergie seulement est utilisée pour exciter l'indexation, le reste étant perdu,
- pas de possibilité simple de faire pré-indexer certaines enveloppes du fait de la nature des encres utilisées dont les propriétés de fluorescence se dégraderaient, comme c'est le cas par exemple sur les enveloppes destinées aux centres de chèque postaux (modèle dit CH 20).

Il existe donc un besoin d'une tête de lecture capable de travailler aussi bien à partir de codes à bâtonnets fluorescents que de codes à contraste. Les modifications à apporter à l'appareil décrit plus haut pour remplir ces deux fonctions vont maintenant être décrites.

L'appareil ainsi obtenu est désigné par le demandeur par l'expression "TALISMAN-PALLAS" abréviation de "Tête Asynchrone de Lecture d'une Indexation par Système de Mesure Analogique et Numérique - Par Analyse en Luminance et en Luminescence Avec Sélection".

Une modification du circuit de la figure 4 permet de travailler également avec des bâtonnets à contraste, sans qu'il y ait lieu de toucher aux moyens situés en amont (dispositif optique d'excitation) ou en aval (moyens de traitement). Il suffit pour cela d'insérer, entre le circuit 27 de suppression de fond de lettre et le circuit 28 de détection des bâtonnets :

- un circuit de discrimination apte à détecter si l'on travaille en fluorescence ou en contraste,
- un circuit de traitement de signal apte soit à diriger directement le signal délivré par le circuit de suppression de fond de lettre vers le circuit de détection des bâtonnets, lorsqu'il s'agit d'effectuer une lecture par fluorescence, soit à inverser la polarité du signal délivré par le circuit 27,

puis à l'amplifier, lorsqu'il s'agit d'effectuer une lecture par différence de contraste.

A ces éléments s'ajoutent un microcalculateur commandant le circuit de traitement en fonction de l'information transmise par le discriminateur ainsi qu'une interface de sortie délivrant un signal indiquant si la lecture qui a été effectuée est une lecture en fluorescence ou en contraste.

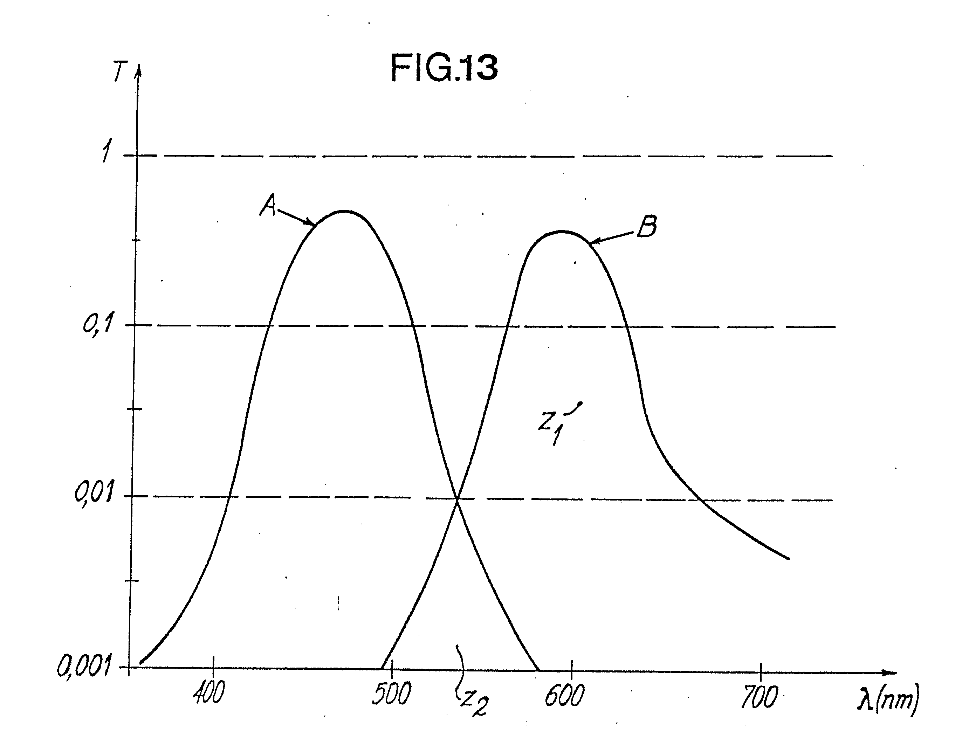

On retrouve, sur le schéma de la figure 12, des moyens déjà illustrés sur la figure 4. Les circuits optionnels 26 (mémoire de fond de lettre) et 29 (aiguilleur) ont été omis par simplification, mais peuvent être utilisés le cas échéant. En plus des moyens déjà illustrés, on trouve :

- un discriminateur 45 à une entrée reliée au circuit 27 de suppression du fond de lettre et à une sortie, ce circuit étant apte à détecter si le signal issu du circuit 27 de suppression de fond de lettre est positif ou négatif,

- un circuit de traitement de signal 46 à une entrée reliée au circuit 27 de suppression de fond de lettre et à une sortie reliée au circuit 28 de détection des bâtonnets, ce circuit étant apte soit à diriger directement le signal délivré sur le circuit 27 de suppression du fond de lettre vers le circuit de détection des bâtonnets 28 lorsqu'il s'agit d'effectuer une lecture par fluorescence, soit à inverser la polarité du signal délivré par le circuit 27 puis à l'amplifier lorsqu'il s'agit d'effectuer une lecture par contraste,

- un microcalculateur 47 relié au circuit 25 de détection de débit et de fin de lettre et également à la sortie du circuit discriminateur 45, ce microcalculateur commandant le circuit de traitement 46 selon ses deux modes opératoires définis plus haut,

B 7727/B 7884.C  RS

**0115236**

– une interface de sortie 48 reliée au microcalculateur 47 et délivrant un signal indiquant si la lecture qui a été effectuée est une lecture en fluorescence ou en contraste.

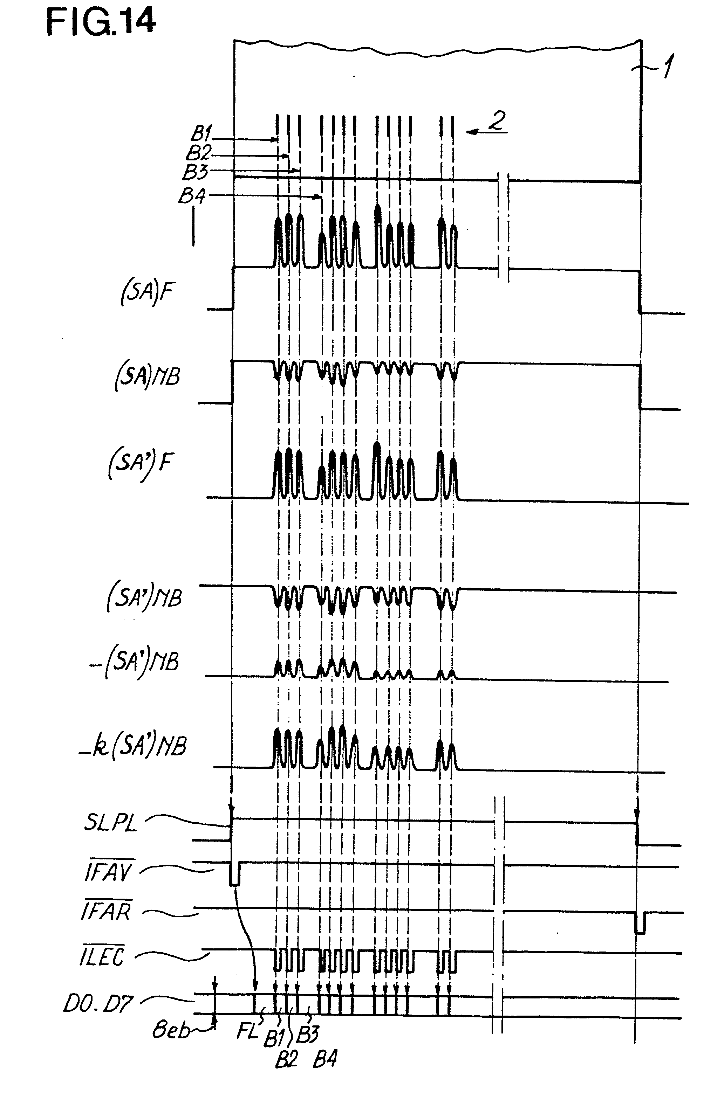

Avant d'exposer le détail du principe de fonctionnement de ce circuit, on décrira la figure 13, qui montre les zones de travail en mode fluorescence ou en mode contraste. La lampe d'excitation étant associée à un filtre bleu, le spectre de transmission est représenté par la courbe A. Le récepteur étant associé à un filtre rouge, le spectre de transmission est représenté par la courbe B.

Lorsque les bâtonnets sont fluorescents, la lumière qu'ils réémettent correspond à la courbe B et la zone de travail du photorécepteur est la zone $Z_1$. Si les bâtonnets sont du type noir sur fond blanc, il n'y a pas de décalage spectral entre les longueurs d'onde d'excitation et d'émission. Le photorécepteur travaille donc dans la zone $Z_2$ qui correspond au recouvrement des spectres A et B. On conçoit dès lors que la sensibilité de l'appareil soit beaucoup plus forte dans le premier cas que dans le second.

Ce dernier point peut être précisé à l'aide de la figure 14 qui reprend certains éléments de la figure 5, à savoir : une lettre 1 à contrôler est recouverte de son code 2, un signal (SA)F, qui représente le signal analogique délivré par le photorécepteur dans le cas d'une indexation fluorescente, un signal SLPL qui représente le signal logique de présence de lettre, les impulsions d'interruption déterminant le front avant $\overline{IFAV}$ et le front arrière $\overline{IFAR}$, les impulsions de lecture des bâtonnets $\overline{ILEC}$ et sur la dernière ligne, les données numériques correspondant aux bâtonnets Bl, B2,..., ces données étant précédées du fond de lettre, soit FL.

Ce diagramme montre en outre une ligne montrant un signal analogique (SA)NB correspondant au cas où l'indexation est en noir et blanc, un signal (SA')F qui est obtenu à partir du signal (SA)F auquel on retranche le signal de fond de lettre, c'est-à-dire le niveau du palier continu de SA(F), un signal (SA')NB obtenu de la même manière à partir de (SA)NB auquel on retranche le fond de lettre, un signal -(SA')NB obtenu en prenant l'opposé du signal précédent et enfin un signal -k(SA')NB obtenu en amplifiant le dernier signal.

Pour en revenir maintenant au circuit de la figure 12, son fonctionnement est le suivant. Le signal SA' délivré par le circuit 27 de suppression du fond de lettre est soit le signal (SA')F, si l'on travaille en fluorescence, soit le signal (SA')NB si l'on travaille en noir et blanc. La différence entre ces deux signaux est double : d'une part, (SA')NB est beaucoup plus faible que (SA)F et, d'autre part, ces signaux sont de polarité opposée. Dès lors, le rôle du discriminateur 45 est de déterminer si l'on a affaire à un signal positif de forte amplitude ou, au contraire, négatif et de faible amplitude. Ce circuit comprend deux comparateurs à seuil, l'un positif et l'autre négatif, dont les sorties sont reliées au microcalculateur 47. L'état de ces sorties indique le cas en présence. S'il s'agit de bâtonnets fluorescents, le microcalculateur commande le circuit 46 de traitement de telle sorte que le signal de sortie - qui est alors (SA')F - soit traité tel que par le circuit de détection de bâtonnets 28. S'il s'agit de bâtonnets noirs sur blanc le circuit de traitement rétablit la polarité du signal en inversant (SA')NB, ce qui donne -(SA')NB et amplifie le signal inversé, ce qui fournit -k(SA')NB. La suite du traitement s'effectue alors comme pour des bâtonnets fluorescents. L'interface 48 délivre un signal binaire indiquant le mode de fonctionnement (fluorescence ou contraste).

A titre explicatif et pour fixer les ordres de grandeur, on peut indiquer que, en fonctionnement par fluorescence, la luminance d'un fond de lettre est de l'ordre de 8 $cd/m^2$ et la luminance correspondant aux bâtonnets fluorescents de 288 $cd/m^2$, soit un rapport de 36 environ. En lecture par contraste, pour le même échantillon, la luminance d'un bâtonnet noir est de 2 $cd/m^2$, soit 144 fois moins que pour la fluorescence.

Le microcalculateur 47 peut être, par exemple une monopuce type Motorola 68705 P3. Il gère l'ensemble des circuits 27 et 46 et assure la chronologie des tests et des événements. Il s'agit d'un circuit 24 pattes pourvu d'une architecture 8 bits comportant 122 octets de mémoire vive à accès direct (RAM), 1804 octets de mémoire morte reprogrammable (EPROM), un compteur interne programmable de 7 bits, des interruptions vectorisées, 20 portes d'entrée-sortie et une horloge intégrée.

L'organigramme de fonctionnement est décrit ci-dessous :

```
        ( )  Mise sous tension

    ┌─────────────────────┐
    │   Initialisation    │
    └─────────────────────┘

         ◇ Lettre ◇ ──── Non

           Oui
    ╱─────────────────────╱
    │   Interruption      │      ⌐⌐→
    │   front avant       ╱
    ╱─────────────────────

    ╱─────────────────────╱
    │   Indicateur        │
    │ présence   lettre = 1
    ╱─────────────────────

    ┌─────────────────────┐
    │  Temporisation 3ms  │
    └─────────────────────┘

    ┌─────────────────────┐
    │   Commande de       │
    │  suppression de     │
    │  fond de lettre     │
    └─────────────────────┘

    ┌─────────────────────┐
    │  Test type lettre   │
    └─────────────────────┘

      ⬡ Indexation fluo. ⬡
   Oui                      Non          Oui
                    ⬡ Indexation noire ⬡ ── Non  ◇ Lettre ? ◇
                            Oui                       Non

┌────────────┐      ┌──────────────┐
│ Traitement │      │  Traitement  │
│   encre    │      │ encre noire  │
│fluorescente│      └──────────────┘
└────────────┘
╱────────────╱      ╱──────────────╱
│ Indicateur │      │  Indicateur  │
│   mode     │      │mode noir/blanc = 1
│fluorescence = 1   ╱──────────────
╱────────────

                            i          ii
```

Il est clair que, dans la description qui précède, l'expression "noir et blanc" n'a été employée que par simplification. L'invention couvre naturellement le cas plus large où les bâtonnets sont foncés sur fond clair (par exemple bleu foncé sur fond bleu clair), l'essentiel étant qu'à chaque bâtonnet corresponde une absorption lumineuse et qu'apparaisse ainsi un contraste entre le fond de lettre et les bâtonnets.

B 7727/B 7884.C   RS

REVENDICATIONS

1. Tête de lecture de codes à bâtonnets marqués sur une lettre, du type comportant une source lumineuse (12), une optique d'émission (14) apte à guider ce rayonnement vers une fente de lecture (9), un photorécepteur (16), une optique de réception (15) apte à diriger le rayonnement provenant de la lettre vers ce photorécepteur (16), un circuit électronique de traitement relié au photorécepteur, cette tête étant caractérisée en ce que ce circuit électronique comprend :

- un amplificateur linéaire (24) relié au photorécepteur (16),
- un circuit (25) de détection de lettre relié à la sortie de l'amplificateur (24), ce circuit délivrant des signaux de début et de fin de lettre, ainsi qu'un signal logique quand une lettre défile devant la tête de lecture,
- un circuit (27) de suppression de fond de lettre,
- un circuit (28) à seuil pour la détection de bâtonnets, relié au circuit précédent (27) et apte à former la dérivée du signal qu'il reçoit et à analyser le passage à zéro de cette dérivée,
- un convertisseur analogique numérique rapide (30) relié à la sortie du circuit (28) de détection des bâtonnets,
- une interface de sortie (31, 32) reliée au convertisseur et adaptée aux moyens de traitement du signal délivré par la tête.

2. Tête de lecture selon la revendication 1, caractérisée en ce qu'elle comprend en outre :
- un circuit (26) de mesure du niveau de fond de lettre relié au circuit (25) de détection de lettre,
- un aiguillage (29) à deux entrées reliées au circuit (28) de détection des bâtonnets et au circuit (26)

B 7727/B 7884.C  RS

de mémoire de fond de lettre et à une sortie.

3. Tête de lecture selon la revendication 1, caractérisée en ce que l'interface de sortie est prise dans le groupe qui comprend :

- une interface de couplage pour microprocesseur avec sortie en trois états,
- une interface de couplage en collecteurs ouverts,
- une interface pour liaison à grande distance ou pour milieu fortement perturbé, avec sorties différentielles pour tous les signaux.

4. Tête de lecture de codes à bâtonnets, selon la revendication 1, caractérisée par le fait que, pour permettre également une lecture par contraste, elle comprend, entre le circuit (27) de suppression de fond de lettre et le circuit (28) de détection des bâtonnets :

- un discriminateur (45) à une entrée reliée au circuit de suppression du fond de lettre et à une sortie, ce circuit étant apte à détecter si le signal issu du circuit (27) de suppression de fond de lettre est positif ou négatif,
- un circuit de traitement de signal (46) à une entrée reliée au circuit (27) de suppression de fond de lettre et à une sortie reliée au circuit (28) de détection des bâtonnets, ce circuit étant apte, soit à diriger directement le signal délivré par le circuit (27) de suppression de fond de lettre vers le circuit de détection des bâtonnets (28) lorsqu'il s'agit d'effectuer une lecture par fluorescence, soit à inverser la polarité du signal délivré par le circuit (27) puis à l'amplifier lorsqu'il s'agit d'effectuer une lecture par différence de contraste,
- une interface de sortie (48) reliée au microcalculateur et délivrant un signal indiquant si la lecture qui a été effectuée est une lecture en fluorescence ou en contraste.

5. Appareil pour la lecture et l'analyse de codes à bâtonnets marqués sur des lettres, caractérisé en ce qu'il comprend :
- un système apte à faire défiler les lettres et comprenant un chemin de défilement (40), deux jeux de deux galets (71, 73 ; 72, 74), l'un d'entraînement (71, 72), l'autre de pressage (73, 74), disposés de part et d'autre du chemin de défilement, deux moteurs (76, 77) commandant les deux galets d'entraînement,
- une tête de lecture (50) située entre les deux jeux de galets à l'aplomb du chemin du défilement, cette tête étant conforme à la revendication 1,
- des moyens de traitement numérique (54, 56, 58) organisés autour d'un microprocesseur (54), ces moyens étant aptes à :
  - analyser diverses caractéristiques des bâtonnets figurant sur l'objet traité et notamment leur intensité, leur durée, leur position, leur espacement,
  - à calculer diverses grandeurs, notamment des moyennes d'intensités, des espacements, des coefficients de variation,
  - effectuer un décodage à partir de la position des bâtonnets détectés et restituer le code correspondant,
  - détecter la présence de taches situées entre les bâtonnets et mesurer leurs caractéristiques,
  - effectuer un étalonnage de l'ensemble des moyens de mesure en ce qui concerne le gain de la tête de lecture et la vitesse de défilement à partir des résultats mesurés par l'appreil lorsqu'une carte étalon portant des bâtonnets de forme et de répartition connues est traitée par l'appareil,

B 7727/B 7884.C  RS

- des moyens périphériques de dialogue entre un utilisateur et l'appareil, ces moyens comprenant, reliés entre eux et aux moyens de traitement, un organe d'affichage alphanumérique (42), un clavier à touches (43) et une imprimante (48).

6. Carte étalon, permettant l'étalonnage de l'appareil selon la revendication 5, caractérisée en ce qu'elle comprend un support rigide (82) sur lequel est disposé un aplat (84) de matière de caractéristiques identiques à celle qui est utilisée pour les objets à traiter, cet aplat étant recouvert d'un cache photographique noir (86) sur lequel des bâtonnets transparents ayant des tailles et des espacements de référence ont été marqués, qui laissent apparaître ladite matière.

1,9

# FIG.1

4,

1

M et Mme XYZW

3, rue ABCD

99800 EFGH

||||  ||||  |||  ||||  ||||

2

3

# FIG.2

0115236

2,9

# FIG.3

# FIG.5

FIG.4

FIG.7

Tête de lecture

Imprimante

Clavier

# FIG.6

4,9

0115236

5,9

# FIG.8

# FIG.9

6,9

## FIG.10

| 7 | 8 | 9 | ST | AT | TS | TA |
| 4 | 5 | 6 | LET | CV | ESP | -1 |
| 1 | 2 | 3 | DIS | MOY | NIV | +1 |
| ERR | 0 | IMP | ACH | COD | IND | CAL |

43

## FIG.11

82

86

84

# FIG.12

0115236

FIG.13

FIG.14

9,9    0115236

**Office européen des brevets**

# RAPPORT DE RECHERCHE EUROPEENNE

EP 83 40 2514

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 236 397 (THOMSON-CSF) * Figures 1,2; page 4, lignes 2-22 * | 1,5 | B 07 C 3/14 G 06 K 7/10 |
| A | FR-A-2 441 889 (BERTIN & CIE.) * Page 4, ligne 6 - page 9, ligne 9 * | 1-3,5 | |
| A | DE-A-2 719 833 (INTERNATIONAL STANDARD ELECTRIC CORP.) * Figure 1; page 7, ligne 19 - page 12, ligne 5 * | 1,2,4, 5 | |
| A | FR-A-1 394 468 (SIEMENS & HALSKE AG) * Page 1, colonne 2 * | 1,4 | |
| A | GB-A-1 079 118 (STANDARD TELEPHONES AND CABLES LTD.) * Page 1, lignes 38-53; figures 1,2 * | 1,4 | **DOMAINES TECHNIQUES RECHERCHES (Int. Cl. ³)** B 07 C G 06 K |
| A | US-A-4 295 040 (BERTHIER) * Figures 1-3; résumé; colonne 2, ligne 57 - colonne 3, ligne 8 * | 4 | |
| A | DE-B-1 274 384 (STANDARD ELEKTRIK LORENZ AG) * Colonne 2, ligne 33 - colonne 3, ligne 3 * | 6 | |

Le présent rapport de recherche a été établi pour toutes les revendications

| Lieu de la recherche | Date d'achèvement de la recherche | Examinateur |
|---|---|---|
| LA HAYE | 13-04-1984 | PESCHEL W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82